# EUROPÄISCHE PATENTANMELDUNG

(11) **EP 2 793 176 A1**
(43) Veröffentlichungstag der Anmeldung: **22.10.2014**
(21) Anmeldenummer: 14160915.6
(22) Anmeldetag: 20.03.2014
(51) Int. Cl.: G06Q 10/06

(54) **Vorrichtung und Verfahren zur Bereitstellung von Daten eines autonomen Systems sowie Verfahren zur Herstellung eines autonomen Systems**

(30) Priorität: 17.04.2013 DE 102013206948
(71) Anmelder: Siemens Aktiengesellschaft, 80333 München (DE)
(72) Erfinder: Dippl, Sebastian, 80538 München (DE); Eidenberger, Robert, 81539 München (DE)

(57) **Zusammenfassung**

Es wird eine Vorrichtung (101) zur Bereitstellung von Daten eines autonomen Systems (102) vorgeschlagen. Die Vorrichtung (101) ist eingerichtet, Daten, die durch das autonome System (102) erzeugt werden, von dem autonomen System (102) zu empfangen (103), die empfangenen Daten an eine Archivierungseinrichtung (104), die extern zu dem autonomen System (102) angeordnet ist, unabhängig von dem Betrieb des autonomen Systems (102) zur Speicherung zu senden (105), und die gespeicherten Daten für eine unabhängige Auswerteeinrichtung (106) bereitzustellen (107).

Durch die Speicherung der im autonomen System anfallenden Daten unabhängig von dem Betrieb des autonomen Systems wird eine verbesserte Datenbereitstellung gewährleistet. Die bereitgestellten Daten können zur Wartung oder Einrichtung des autonomen Systems verwendet werden.

Ferner werden ein System mit der Vorrichtung sowie ein Verfahren zur Bereitstellung von Daten eines autonomen Systems und ein Verfahren zur Herstellung eines autonomen Systems vorgeschlagen.

## Beschreibung

Die vorliegende Erfindung betrifft eine Vorrichtung und ein Verfahren zum Bereitstellen von Daten eines autonomen Systems. Ferner betrifft die Erfindung ein System mit einer solchen Vorrichtung. Des Weiteren betrifft die Erfindung ein Verfahren zum Herstellen eines autonomen Systems.

Auf verschiedenen technischen Gebieten, wie beispielsweise der Lagerung von Waren, werden halb oder vollautomatisierte industrielle Systeme eingesetzt, die autonom Entscheidungen treffen. So gibt es beispielsweise Hafenkräne, die automatisiert Container aufnehmen und platzieren, Gabelstapler, die autonom Paletten versetzen, oder automatisierte Bagger, die im Bergbau eingesetzt werden können. Diese autonomen Systeme ermitteln mit Hilfe von Sensoren ihre Umgebung. Basierend auf diesen Ermittlungen führen die autonomen Systeme Aktionen durch.

Zur Entwicklung, Wartung, Fehlersuche oder ähnlichem wird üblicherweise Zugriff auf die Daten der autonomen Systeme benötigt. Dieser Zugriff wird bislang durch ein Wartungs-Team oder Entwicklungs-Team vor Ort oder über eine Remote-Verbindung direkt in das autonome System durchgeführt. Allerdings sind die Speicherkapazitäten in dem autonomen System typischerweise begrenzt. Die Daten stehen daher nur begrenzt zur Verfügung. Des Weiteren wird durch einen direkten Zugriff auf die Daten in den autonomen System eventuell in den Betrieb des autonomen Systems eingegriffen oder dieser sogar unterbrochen. Ein solcher Zugriff auf die Daten, vor Ort oder über eine Remote-Verbindung, kann außerdem einige Tage in Anspruch nehmen, eine Wartung oder Fehlersuche sollte jedoch wünschenswerterweise möglichst schnell erfolgen können.

Vor diesem Hintergrund besteht eine Aufgabe der vorliegenden Erfindung darin, einen effizienten und schnellen Zugriff auf Daten eines autonomen Systems zu gewährleisten, bevorzugt ohne in den Betrieb des autonomen Systems einzugreifen.

Demgemäß wird eine Vorrichtung zur Bereitstellung von Daten eines autonomen Systems, welches dazu eingerichtet ist, mit Sensoren eine Umgebung zu ermitteln und basierend darauf Umgebungsmodelle zu erzeugen, vorgeschlagen. Die Vorrichtung ist eingerichtet, Daten, die durch das autonome System erzeugt werden, von dem autonomen System zu empfangen, die empfangenen Daten an eine Archivierungseinrichtung, die extern zu dem autonomen System angeordnet ist, unabhängig von dem Betrieb des autonomen Systems zur Speicherung zu senden, und die gespeicherten Daten für eine unabhängige Auswerteeinrichtung bereitzustellen.

Gemäß einem weiteren Aspekt wird ein System zum Bereitstellen von Daten eines autonomen Systems vorgeschlagen. Das System weist ein autonomes System, welches dazu eingerichtet ist, mit Sensoren eine Umgebung zu ermitteln und basierend darauf Umgebungsmodelle zu erzeugen, und eine oben beschriebene Vorrichtung zum Bereitstellen von Daten des autonomen Systems, die mit dem autonomen System gekoppelt ist, auf. Des Weiteren weist das System eine Archivierungseinrichtung, die mit der oben beschriebenen Vorrichtung gekoppelt ist, und eine Auswerteeinrichtung zur Steuerung des autonomen Systems auf, die mit der Archivierungseinrichtung und dem autonomen System gekoppelt ist.

Gemäß einem weiteren Aspekt wird ein Verfahren zum Betreiben eines autonomen Systems, welches dazu eingerichtet ist, mit Sensoren eine Umgebung zu ermitteln und basierend darauf Umgebungsmodelle zu erzeugen, vorgeschlagen. Hierbei werden Daten, die von dem autonomen System erzeugt wurden und die in einer Archivierungseinrichtung gespeichert sind, einer unabhängigen Auswerteeinrichtung zum Betreiben des autonomen Systems bereitgestellt.

Gemäß einem weiteren Aspekt wird ein Verfahren zur Herstellung eines autonomen Systems vorgeschlagen. Das Verfahren weist die folgenden Schritte auf: Bereitstellen eines autonomen Systems, welches dazu eingerichtet ist, mit Sensoren eine Umgebung zu ermitteln und basierend darauf Umgebungsmodelle zu erzeugen, Bereitstellen und insbesondere Speichern von Daten, die durch das autonome System erzeugt wurden, unabhängig von dem Betrieb des autonomen Systems, und Anpassen des autonomen Systems basierend auf den bereitgestellten Daten.

Wie bereits erläutert ermitteln autonome Systeme ihre Umgebung mit Hilfe von Sensoren. Solche Sensoren können optische oder akustische Sensoren, Bewegungssensoren, Positionssensoren oder irgendeine Art von Sensoren sein, die verwendet werden können, um basierend auf den erfassten Signalen der Sensoren Umgebungsmodelle zu erzeugen. Diese Umgebungsmodelle können 3D- oder 2D-Modelle sein. Die Umgebungsmodelle dienen dazu, dass die autonomen Systeme basierend auf diesen Modellen mittels verschiedener Algorithmen Aktionen bestimmen können, die sie als nächstes durchführen. Als Algorithmen können beispielsweise Mustererkennungen und Wahrscheinlichkeitsberechnungen dienen. Als autonomes System wird daher in diesem Zusammenhang ein automatisiertes oder teilautomatisiertes System verstanden, dass autonom, also selbstständig und unabhängig, seine Umgebung wahrnimmt, Entscheidungen trifft oder plant und Aktionen durchführt.

Die Sensoren können beispielsweise Laserscanner aufweisen, die die Umgebung abtasten und hierbei eine Punktwolke erzeugen. Des Weiteren können die Sensoren Gyroskope, Geschwindigkeitssensoren, GPS-Sensoren, Ultraschallsensoren, Radarsensoren, etc. aufweisen. Die Sensoren können dazu eingesetzt werden, die inneren Zustände der einzelnen Elemente des autonomen Systems und die externe Umgebung zu ermitteln. Die ermittelte externe Umgebung kann dabei zunächst Linien und Flächen, also Oberflächenstrukturen, entsprechen. Basierend auf diesen Strukturen können im Anschluss 3D-Modelle der Umgebung berechnet werden.

Die Daten, die in dem autonomen System erzeugt werden, werden dann an eine Archivierungseinrichtung gesendet, unabhängig von dem Betrieb des autonomen Systems. Hierbei wird nicht in den Betrieb des autonomen Systems eingegriffen, der Betrieb muss also nicht unterbrochen werden. Diese Archivierungseinrichtung kann beispielsweise eine Speichereinrichtung sein.

Die gespeicherten Daten werden beispielsweise einer unabhängigen Auswerteeinrichtung bereitgestellt. Die Auswerteeinrichtung ist nicht Teil des autonomen Systems, das heißt, sie kann entfernt von dem autonomen System angeordnet sein. Die Auswerteeinrichtung dient dazu, das autonome System einzurichten, zu warten, Fehlerfälle zu beheben oder zu diagnostizieren oder ähnliches.

Die Vorrichtung kann als Teil des autonomen Systems ausgebildet sein. Sie kann auch als Vorrichtung extern zu dem autonomen System ausgebildet sein. In einer Ausführungsform kann die Vorrichtung als Erweiterungselement für bereits bestehende autonome Systeme ausgebildet sein, die über eine Schnittstelle mit dem autonomen System interagiert. Über die Schnittstelle können die Daten des autonomen Systems an die Vorrichtung weitergegeben werden.

Im Fall des Herstellens des autonomen Systems werden die bereitgestellten Daten verwendet, um das autonome System einzurichten und zu kalibrieren. Auf diese Weise kann ein autonomes System auf einfache Weise an einem Ort aufgebaut werden und von einem anderen Ort aus eingerichtet werden. Dies ist beispielsweise wünschenswert, wenn der Hersteller oder ein Wartungsteam des Herstellers räumlich entfernt von dem tatsächlichen Standort des autonomen Systems ist.

Im Folgenden werden Ausführungsformen der Vorrichtung, des Systems und der Verfahren näher erläutert.

Gemäß einer Ausführungsform weist das autonome System Einrichtungen auf, die autonom Handlungen vornehmen. Insbesondere weist das autonome System eines oder mehrere eines Gabelstaplers, Krans, insbesondere Hafenkran, Autopiloten, Putzmaschine, Baumaschine, Bagger, Fahrerassistenzsystems auf.

Ein autonomes System kann mehrere einzelne autonome Einrichtungen aufweisen. Diese Einrichtungen können die gleichen sein, beispielsweise mehrere Gabelstapler, oder auch aus verschiedenen Einrichtungen bestehen, beispielsweise Gabelstapler und Kräne. Das autonome System kann teilautomatisiert sein. Das bedeutet, dass die Umgebung nicht von Anfang an vollständig bestimmt ist. Es können beispielsweise auch Eingriffe in das System durch Personen erfolgen, beabsichtigt oder unbeabsichtigt.

Gemäß einer weiteren Ausführungsform ist die Archivierungseinrichtung eingerichtet, die Daten über einen vorgegebenen Zeitraum zu speichern.

Der Zeitraum kann beliebig lang gewählt sein. Der Zeitraum kann beispielweise von der Auswerteeinrichtung abhängen. Dient die Auswerteeinrichtung zur Einrichtung und Kalibrierung des autonomen Systems kann der Zeitraum kürzer gewählt sein, dient die Auswerteeinrichtung zur dauerhaften Wartung und/oder Überwachung des autonomen Systems, sollte der Zeitraum möglichst lang gewählt sein. Die Archivierungseinrichtung kann ausgebildet sein, die Daten redundant zu speichern. Hierzu kann die Archivierungseinrichtung zwei oder mehrere Speichereinrichtungen aufweisen.

Gemäß einer weiteren Ausführungsform weist die Archivierungseinrichtung einen skalierbaren Speicher, insbesondere einen verteilten Speicher, auf.

Durch die Verwendung eines skalierbaren Speichers kann der Speicher je nach Speicherbedarf erhöht oder verringert werden. Statt die anfallenden Daten in einem Rundpuffer des autonomen Systems lokal zu speichern, werden die Daten gemäß dieser Ausführungsform in der Archivierungseinrichtung abgelegt. Im Gegensatz zu einem Rundpuffer, in dem die Daten nach einem bestimmten Zeitraum, nach Volllaufen des Speichers, wieder überschrieben werden, können die Daten in einem skalierbaren Speicher beliebig anwachsen. Durch die Nutzung eines verteilten Speichers, oder Speichersystems, können die Daten auf verschiedenen einzelnen Speichern an verschiedenen Orten gespeichert werden, beispielsweise im Rahmen eines Cloud-Computing-Systems. Auf diese Weise kann sehr flexibel auf eine wachsende Datenmenge reagiert werden.

Gemäß einer weiteren Ausführungsform sind die empfangenen Daten codiert.

Um die Sicherheit des autonomen Systems, z.B. gegen unbefugte Eingriffe, zu gewährleisten, können die Daten beim Versenden aus dem autonomen System codiert sein. Eine Codierung kann in diesem Fall eine kryptographische Verschlüsselung darstellen. Als kryptographische Verschlüsselung kann jede Art von kryptographischer Codierung verwendet werden, die ein Lesen, Schreiben oder sonstigen Zugriff auf die Daten durch Unbefugte verhindern kann.

Gemäß einer weiteren Ausführungsform ist die Vorrichtung eingerichtet, die Daten von dem autonomen System über eine Netzwerkverbindung zu empfangen.

Die Daten können von dem autonomen System an die Archivierungseinrichtung über irgendeine Art von Netzwerkverbindung gesendet werden. Diese kann drahtlos oder kabelgebunden realisiert sein. Hierzu zählen beispielsweise Funkverbindungen wie NFC, WiFi, WLAN, Bluetooth, GSM, UMTS, LTE, oder kabelgebundene Datennetze wie Ethernet, kabelgebundenes Telefonnetz, etc. Im Rahmen der Netzwerkverbindung kann auch eine gesicherte Übertragung, beispielsweise unter Verwendung von VPN, realisiert werden.

Gemäß einer weiteren Ausführungsform ist die Vorrichtung eingerichtet, die empfangenen Daten vor der Speicherung zu verarbeiten.

Eine solche Vorverarbeitung kann dazu verwendet werden, die empfangenen Daten zur weiteren Verarbeitung durch die Auswerteeinrichtung vorzubereiten. Durch eine solche Vorverarbeitung kann beispielsweise der Zugriff auf die Daten durch die Auswerteeinrichtung vereinfacht und/oder beschleunigt werden.

Gemäß einer weiteren Ausführungsform ist die Vorrichtung eingerichtet, die empfangenen Daten zu indexieren.

Eine solche Vorverarbeitung kann beispielsweise eine Indexierung beinhalten. Die Indexierung kann eine automatisierte Unterteilung der Daten, die dann mit Attributen versehen werden beinhalten. Hierbei können die verschiedenen Daten mit Hilfe von Indexen als durchsuchbare Datenbank abgelegt werden. Eine weitere Verarbeitung wird dadurch erheblich vereinfacht, da die Daten durch eine Suche wiedergefunden werden können. Die Attribute können beispielsweise Zeitstempel oder Fehlerereignisse sein, die als Metadaten an die Daten angehängt werden können.

Die Auswerteeinrichtung kann über eine Schnittstelle zwischen der Auswerteeinrichtung und der Archivierungseinrichtung auf die gespeicherten Daten zugreifen. Sofern eine Verbindung zwischen der Auswerteeinrichtung und der Archivierungseinrichtung besteht, kann die Auswerteeinrichtung jederzeit auf alle gespeicherten Daten zugreifen. Um die Suche nach Daten zu vereinfachen, kann die Auswerteeinrichtung die oben genannten Indexe oder sonstigen Attribute verwenden. Die Suche kann auch durch die Archivierungseinrichtung auf Anfrage der Auswerteeinrichtung durchgeführt werden, die dann die relevanten Daten an die Auswerteeinrichtung bereitstellt. Eine solche Suche kann z.B. auch die Suche nach Standort, Typ, Seriennummer oder sonstigen Eigenschaften des autonomen Systems beinhalten.

Gemäß einer weiteren Ausführungsform ist die Vorrichtung eingerichtet, eine automatisierte Erkennung von Fehlern des autonomen Systems durchzuführen.

Basierend auf den Daten, die von dem autonomen System empfangen werden, kann die Vorrichtung eine automatisierte Fehlersuche durchführen. Diese automatisierte Fehlersuche kann beispielsweise darauf basieren, dass Veränderungen zwischen früher empfangenen Daten und aktuell empfangenen Daten festgestellt und automatisiert untersucht werden. Auch eine Abweichung von einem vorgeschriebenen Schwellwert kann zur Fehlererkennung herangezogen werden. Sobald ein Fehler erkannt wurde, kann dies an die Auswerteeinrichtung gemeldet werden, die daraufhin mit der Fehlerbehebung fortfahren kann.

Gemäß einer weiteren Ausführungsform ist die Vorrichtung eingerichtet, die Daten in vorbestimmten Zeitintervallen zu empfangen und/oder die Daten fortlaufend zu empfangen.

Je nach System können die Daten gesammelt in einem bestimmten Intervall gesendet werden. Das Intervall kann beispielsweise ein Abstand von ein paar Stunden, täglich oder wöchentlich sein. Das Intervall kann beispielsweise von der Speicherkapazität eines lokal vorhandenen Speichers abhängen. Das autonome System kann einen lokalen Speicher aufweisen, der als Zwischenpuffer dient, bevor die Daten in der Archivierungseinrichtung gespeichert werden. In einer Ausführungsform werden die Daten von dem autonomen System fortlaufend an die Archivierungseinrichtung gesendet, das heißt als ein Datenstream in Echtzeit.

Gemäß einer weiteren Ausführungsform weisen die Daten Rohdaten und/oder Prozessdaten und/oder Protokolldaten auf.

Die Rohdaten entsprechen beispielsweise den Daten, die durch die im autonomen System vorhandenen Sensoren ermittelt werden. Bei der Berechnung der Umgebungsmodelle entstehen aus den Rohdaten Prozessdaten. Die Prozessdaten können auch die Entscheidungen und die zugehörigen Berechnungen aufweisen, die auf den Rohdaten beruhen. Zusätzlich zu den Rohdaten und den Prozessdaten können die Daten auch Protokolldaten oder Logdaten enthalten. Diese Protokolldaten beinhalten beispielsweise Informationen über durchgeführte Aktionen. Insbesondere werden in der Archivierungseinrichtung Daten gespeichert, die üblicherweise in dem autonomen System verworfen werden würden.

Gemäß einer weiteren Ausführungsform ist die Auswerteinrichtung eingerichtet, das autonome System basierend auf den bereitgestellten Daten anzupassen.

Ein Anpassen kann beispielsweise Ändern von Parameter bzw. Einstellungen des autonomen Systems, Ändern von Algorithmen oder weitere Änderungen an dem autonomen System beinhalten, die auf einer Evaluierung der bereitgestellten Daten basieren. Die Auswerteeinrichtung kann hierbei z.B. als Wartungs- oder Herstellungseinrichtung dienen.

Weiterhin wird ein Computerprogrammprodukt vorgeschlagen, welches auf einer programmgesteuerten Einrichtung die Durchführung eines oder beider wie oben erläuterten Verfahren veranlasst.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Die für die vorgeschlagene Vorrichtung beschriebenen Ausführungsformen und Merkmale gelten für das vorgeschlagene System sowie die vorgeschlagenen Verfahren entsprechend. Ebenso gelten für das System oder die Verfahren beschriebene Ausführungsformen und Merkmale für die vorgeschlagene Vorrichtung entsprechend. Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.
- Fig. 1: zeigt ein System zur Bereitstellung von Daten eines autonomen Systems;
- Fig. 2: zeigt eine weitere Ausführungsform eines Systems zur Bereitstellung von Daten eines autonomen Systems;
- Fig. 3: zeigt ein Verfahren zur Bereitstellung von Daten eines autonomen Systems; und
- Fig. 4: zeigt ein Verfahren zur Herstellung eines autonomen Systems.

In den Figuren sind gleiche oder funktionsgleiche Elemente mit denselben Bezugszeichen versehen worden, sofern nichts anderes angegeben ist.

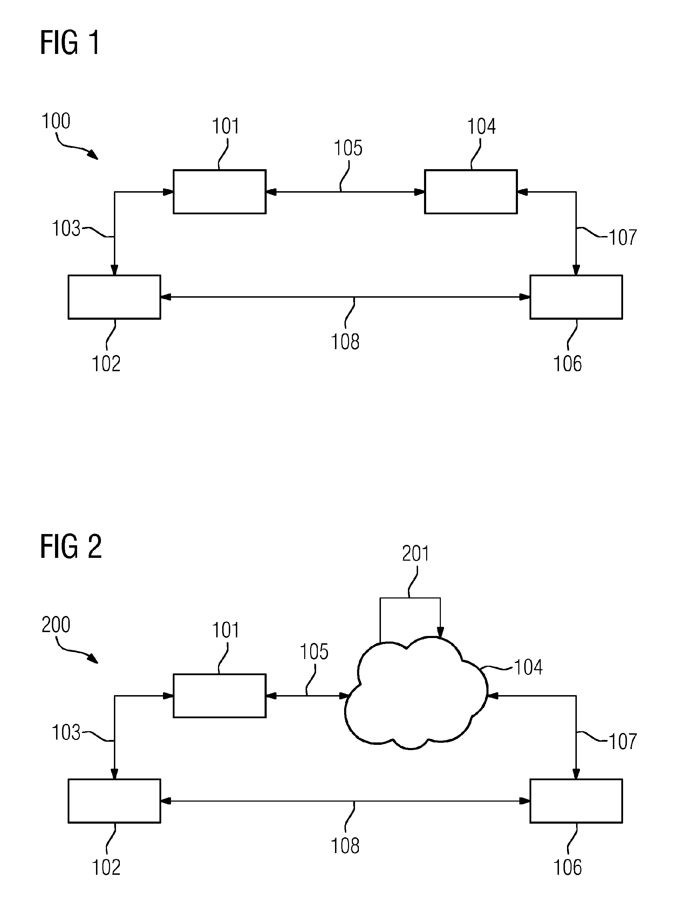

Fig. 1 zeigt ein System 100 zur Bereitstellung von Daten eines autonomen Systems 102. Das autonome System 102 kann ein oder mehrere autonome Einrichtungen aufweisen. Diese ermitteln basierend auf Sensordaten ihre Umgebung und führen basierend auf diesen Sensordaten Aktionen durch. Die dabei anfallenden bzw. erzeugten Daten werden von dem autonomen System 102 an eine Vorrichtung 101 gesendet bzw. von dieser empfangen 103. Das autonome System 102 kann beispielsweise speicherprogrammierbare Schaltungen (SPS) bzw. Programmable Logic Controller (PLC) aufweisen. Diese können eingesetzt werden, um das autonome System 102 zu regeln oder zu steuern.

Die Vorrichtung 101 ist dazu ausgebildet, die empfangenen Daten an eine Archivierungseinrichtung 104 zu senden 105. In der Archivierungseinrichtung 104 werden die empfangenen Daten gespeichert. Die gespeicherten Daten können einer Auswerteeinrichtung 106 bereitgestellt werden. Die Auswerteeinrichtung 106 kann die gespeicherten Daten in bestimmten Intervallen abrufen oder von der Vorrichtung 101 oder der Archivierungseinrichtung 104 eine Mitteilung erhalten, dass ein bestimmtes Ereignis, wie ein Fehler, aufgetreten ist, und dass die Auswerteeinrichtung 106 die Daten abrufen soll.

Basierend auf den bereitgestellten Daten kann die Auswerteeinrichtung 106 Handlungen an oder in dem autonomen System 102 durchführen, wie beispielsweise das autonome System 102 anpassen 108. Anpassen des autonomen Systems 102 kann beispielsweise ein Kalibrieren, Einrichten oder Justieren des autonomen Systems 102 beinhalten. Da die Daten, die von der Auswerteeinrichtung 106 benötigt werden, nicht in dem autonomen System 102 sondern getrennt davon in der Archivierungseinrichtung 104 gespeichert sind, muss die Auswerteeinrichtung 106 nicht auf das autonome System 102 zugreifen. Das bedeutet, dass ein Support nicht auf das produktive System zugreifen muss. Ein Zugriff von der Auswerteeinrichtung 106 auf das autonome System 102 erfolgt nur im Rahmen der Anpassung.

Die Auswerteeinrichtung 106 kann die Archivierungseinrichtung 104 auch als Grundlage für Neuentwicklungen oder als Testumgebung heranziehen. Hierbei kann ausgenützt werden, dass ein zeitentkoppeltes Abspielen der gespeicherten Daten möglich ist und keine Echtzeitbeobachtung erforderlich ist.

In einer weiteren Ausführungsform kann ein Rückkanal zwischen der Vorrichtung 101 bzw. der Archivierungseinrichtung 104 und dem autonomen System 102 realisiert sein. Ein solcher Rückkanal kann verwendet werden, um Daten zwischen autonomen Systemen 102 zu ermöglichen. Insbesondere bei autonomen Systemen 102 des gleichen Typs kann beispielsweise ein Austausch einer Objektdatenbank erfolgen. Auf diese Weise müssen einmal erkannte und berechnete Objekte nicht mehr neu berechnet werden, da sie bereits in der Archivierungseinrichtung 104 gespeichert sind.

In Fig. 1 und 2 sind die Datenflüsse durch die Pfeile 103, 105, 107 und 108 angedeutet. Hierbei entspricht 103 einem Senden bzw. Empfangen von Daten zwischen dem autonomen System 102 und der Vorrichtung 101. 105 entspricht einem Senden bzw. Empfangen von Daten zwischen der Vorrichtung 101 und der Archivierungseinrichtung 104. 107 entspricht einem Bereitstellen von Daten von der Archivierungseinrichtung 104 an die Auswerteeinrichtung 106. 108 entspricht einem Signalfluss zwischen der Auswerteeinrichtung 106 und dem autonomen System 102. Der Signalfluss 108 kann ein Anpassen des autonomen Systems 102 sein. Das autonome System 102 kann eine diesbezügliche Rückmeldung an die Auswerteeinrichtung 106 senden.

Die Archivierungseinrichtung 104 kann ein skalierbarer, verteilter Speicher sein. In dem System 200 von Fig. 2 ist die Archivierungseinrichtung 104 beispielsweise als Cloud-Speicher gezeigt. Es kann auch irgendeine andere Art von Speicher eingesetzt werden. Durch einen solchen skalierbaren Speicher kann ein Langzeitarchiv bereitgestellt werden, das beliebig, je nach Bedarf, erweitert werden kann.

Wie in Fig. 2 gezeigt, kann vor oder während der Speicherung der empfangenen Daten 103 bzw. 105 eine Vorverarbeitung 201 der Daten in der Archivierungseinrichtung 104 durchgeführt werden. Diese Vorverarbeitung kann auch vollständig oder teilweise in der Vorrichtung 101 oder in dem autonomen System 102 durchgeführt werden. Da die Vorverarbeitung 201 getrennt bzw. unabhängig von dem autonomen System 102 durchgeführt wird, beeinflusst die Vorverarbeitung 201, also eine Aktivität an dem Datenarchiv, die Leistung bzw. Performance des autonomen Systems 102 bzw. von Elementen (wie CPU, Speicher, etc.)) des autonomen Systems 102 nicht.

Eine solche Vorverarbeitung 201 dient dazu, die empfangenen Daten zu strukturieren, um den Zugriff auf bzw. die Verwendung der Daten zu vereinfachen. Die eingehenden Daten 105 können beispielsweise indexiert wird, um den Zugriff zu vereinfachen und eine Suche nach bestimmten Daten zu ermöglichen. Die eingehenden Daten 105 können bereits beim Empfangen durch die Archivierungseinrichtung 104 im Rahmen der Vorverarbeitung 201 auf Fehlerereignisse untersucht werden. So können beispielsweise bereits hier Betriebsmeldungen, Warnhinweise und Fehlermeldungen erkannt und gemeldet (z.B. an die Auswerteeinrichtung 106) werden. Auch Ausfallszeiten, das heißt Zeiten ohne Daten, können beim Empfangen erkannt werden.

Durch die Vorverarbeitung 201 können die Daten 105 für die Diagnose durch die Auswerteeinrichtung 106 vorbereitet werden. So können Leerlaufzeiten aus den Daten entfernt oder weitere Informationen, wie aus den Rohdaten berechnete Werte, hinzugefügt werden. Des Weiteren können mehrere Datenströme verschiedener autonomer Systeme 102 kombiniert werden, um ein globales Wissen bereitzustellen.

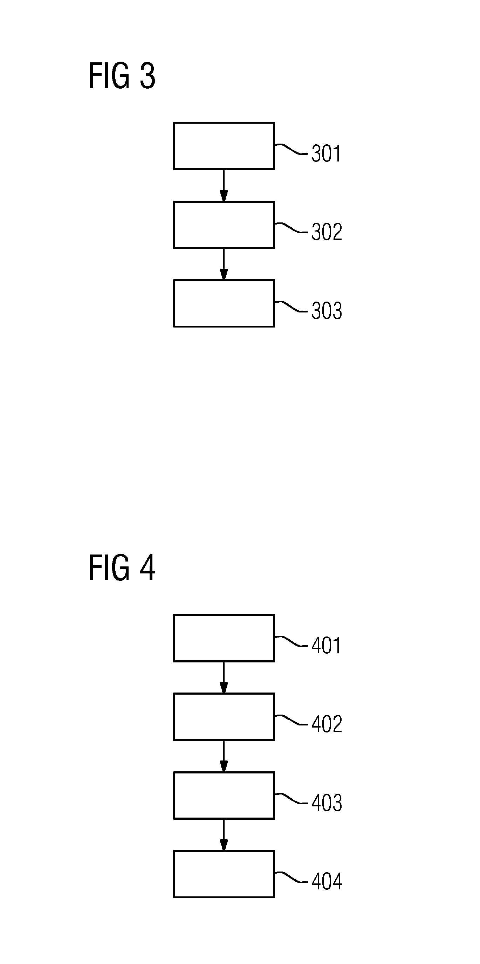

Bei dem Übermitteln der Daten von dem autonomen System 102 bis zur Auswerteeinrichtung 106 können verschiedene Konvertierungen der Daten durchgeführt werden. Dies kann erforderlich oder zumindest hilfreich sein, um jedem Element die Daten in dem erforderlichen Format zur Verfügung zu stellen. Wie bereits erläutert, kann die Vorrichtung 101 verwendet werden, um Daten eines autonomen Systems 102 bereitzustellen. Fig. 3 zeigt ein Flussdiagramm eines entsprechenden Verfahrens. Wie oben erläutert werden Daten, die in dem autonomen System 102 erzeugt werden 301, in einer Archivierungseinrichtung 104 gespeichert 302. Diese gespeicherten Daten können einer unabhängigen Auswerteeinrichtung 106 bereitgestellt werden 303. Basierend auf diesen Daten kann die Auswerteeinrichtung 106 das autonome System 102 betreiben.

Durch die Bereitstellung der Daten 303 kann die Auswerteeinrichtung 106 schnell auf die Daten zugreifen und das autonome System 102 betreiben, beispielsweise Änderungen an Einstellungen vornehmen, ohne dass die Daten von dem autonomen System 102 über komplizierte oder aufwendige Verfahren an die Auswerteeinrichtung 106 übermittelt werden müssen.

Die Vorrichtung 101 kann auch verwendet werden, um ein autonomes System 102 herzustellen. Dies ist in Fig. 4 näher erläutert. In einem ersten Schritt 401 wird das autonome System 102 bereitgestellt. Das autonome System 102 kann beispielsweise aufgebaut werden. Testweise kann das autonome System 102 den Betrieb aufnehmen, wobei Daten, die durch das autonome System 102 erzeugt werden 402, gesammelt und mit Hilfe der Vorrichtung 101 der Auswerteeinrichtung 106 bereitgestellt werden 403.

Anschließend kann die Auswerteeinrichtung 106 die Daten untersuchen und basierend auf diesen eine Anpassung des autonomen Systems 102 vornehmen 404. Die Anpassung kann einer Justage oder Kalibrierung des autonomen Systems 102 entsprechen. Auf diese Weise kann eine Remote-Kalibrierung des autonomen Systems 102 ermöglicht werden.

Obwohl die vorliegende Erfindung anhand von Ausführungsbeispielen beschrieben wurde, ist sie vielfältig modifizierbar.

## Patentansprüche

1. Vorrichtung (101) zur Bereitstellung von Daten eines autonomen Systems (102), welches dazu eingerichtet ist, mit Sensoren eine Umgebung zu ermitteln und basierend darauf Umgebungsmodelle zu erzeugen, wobei die Vorrichtung (101) eingerichtet ist,
- Daten, die durch das autonome System (102) erzeugt werden, von dem autonomen System (102) zu empfangen (103),
- die empfangenen Daten an eine Archivierungseinrichtung (104), die extern zu dem autonomen System (102) angeordnet ist, unabhängig von dem Betrieb des autonomen Systems (102) zur Speicherung zu senden (105), und
- die gespeicherten Daten für eine unabhängige Auswerteeinrichtung (106) bereitzustellen (107).

2. Vorrichtung (101) nach Anspruch 1, **dadurch gekennzeichnet, dass** das autonome System (104) Einrichtungen aufweist, die autonom Handlungen vornehmen, insbesondere eines oder mehrere eines Gabelstaplers, Krans, Autopiloten, Putzmaschine, Baumaschine, Baggers, Fahrerassistenzsystems.

3. Vorrichtung (101) nach Anspruch 1 oder 2, **dadurch gekennzeichnet, dass** die Archivierungseinrichtung (104) eingerichtet ist, die Daten über einen vorgegebenen Zeitraum zu speichern.

4. Vorrichtung (101) nach einem der Ansprüche 1 - 3, **dadurch gekennzeichnet, dass** die Archivierungseinrichtung (104) einen skalierbaren Speicher, insbesondere einen verteilten Speicher, aufweist.

5. Vorrichtung (101) nach einem der Ansprüche 1 - 4, **dadurch gekennzeichnet, dass** die empfangenen Daten codiert sind.

6. Vorrichtung (101) nach einem der Ansprüche 1 - 5, **dadurch gekennzeichnet, dass** die Vorrichtung (101) eingerichtet ist, die Daten von dem autonomen System (102) über eine Netzwerkverbindung zu empfangen.

7. Vorrichtung (101) nach einem der Ansprüche 1 - 6, **dadurch gekennzeichnet, dass** die Vorrichtung (101) eingerichtet ist, die empfangenen Daten vor der Speicherung zu verarbeiten (201).

8. Vorrichtung (101) nach Anspruch 7, **dadurch gekennzeichnet, dass** die Vorrichtung (101) eingerichtet ist, die empfangenen Daten zu indexieren (201).

9. Vorrichtung (101) nach einem der Ansprüche 7 oder 8, **dadurch gekennzeichnet, dass** die Vorrichtung (101) eingerichtet ist, eine automatisierte Erkennung von Fehlern des autonomen Systems (102) durchzuführen.

10. Vorrichtung (101) nach einem der Ansprüche 1 - 9, **dadurch gekennzeichnet, dass** die Vorrichtung (101) eingerichtet ist, die Daten in vorbestimmten Zeitintervallen zu empfangen (103) und/oder die Daten fortlaufend zu empfangen (103).

11. Vorrichtung (101) nach einem der Ansprüche 1 - 10, **dadurch gekennzeichnet, dass** die Daten Rohdaten und/oder Prozessdaten und/oder Protokolldaten aufweisen.

12. System (100) zum Bereitstellen von Daten eines autonomen Systems (102), mit:
- einem autonomen System (102), welches dazu eingerichtet ist, mit Sensoren eine Umgebung zu ermitteln und basierend darauf Umgebungsmodelle zu erzeugen,
- einer Vorrichtung (101) nach einem der Ansprüche 1 - 11, die mit dem autonomen System (102) gekoppelt ist,
- einer Archivierungseinrichtung (104), die mit der Vorrichtung (101) gekoppelt ist, und
- einer Auswerteeinrichtung (106) zur Steuerung des autonomen Systems (102), die mit der Archivierungseinrichtung (104) und dem autonomen System (102) gekoppelt ist.

13. System (200) nach Anspruch 11, **dadurch gekennzeichnet, dass** die Auswerteeinrichtung (106) eingerichtet ist, das autonome System (102) basierend auf den bereitgestellten Daten anzupassen.

14. Verfahren zum Betreiben eines autonomen Systems (102) nach einem der Ansprüche 12 oder 13, welches dazu eingerichtet ist, mit Sensoren eine Umgebung zu ermitteln und basierend darauf Umgebungsmodelle zu erzeugen, wobei Daten, die von dem autonomen System (102) erzeugt wurden (301) und die in einer Archivierungseinrichtung (104) gespeichert sind (302), einer unabhängigen Auswerteeinrichtung (106) zum Betreiben des autonomen Systems (102) bereitgestellt werden (303).

15. Verfahren zur Herstellung eines autonomen Systems (102), mit den Schritten:
- Bereitstellen (401) eines autonomen Systems (102), welches dazu eingerichtet ist, mit Sensoren eine Umgebung zu ermitteln und basierend darauf Umgebungsmodelle zu erzeugen,
- Bereitstellen (403) von Daten, die durch das autonome System (102) erzeugt wurden (402), unabhängig von dem Betrieb des autonomen Systems (102), und
- Anpassen (404) des autonomen Systems (102) basierend auf den bereitgestellten Daten.
